# EUROPEAN PATENT SPECIFICATION

(11) **EP 0 767 530 B1**
(45) Date of publication and mention of the grant of the patent: **10.12.2003**
(21) Application number: 96307175.8
(22) Date of filing: 01.10.1996
(51) Int. Cl.: F02N 11/04, H02M 7/219

(54) **Regulator for permanent magnet generator and permanent magnet generator**
Permanentmagnetgenerator und Regler für diesen Generator
Alternateur à aimant permanent et régulateur pour cet alternateur

(30) Priority: 06.10.1995 GB 9520390
(43) Date of publication of application: 09.04.1997
(73) Proprietor: Goodrich Control Systems Limited, Luton, Bedfordshire LU1 3LU (GB)
(72) Inventor: Turvey, Simon, Birmingham, B28 0LS (GB)
(74) Representative: Robinson, John Stuart

(56) References cited:
- EP-A- 0 406 182
- GB-A- 2 117 143
- US-A- 4 761 726

## Description

The present invention relates to a regulator for a permanent magnet generator. The present invention also relates to a permanent magnet generator incorporating such a regulator.

In high integrity engine control systems, for instance in aircraft control systems, power for an electronic engine controller and its associated systems is, for integrity reasons, generally derived from two independent power sources. Once of these sources is usually a permanent magnet generator. However, a problem with such generators is that output is a function of the speed at which the generator is driven. The range of speeds over which such a generator is driven and is required to produce adequate power can vary widely with a ratio between maximum and minimum speeds being as high as 12:1.

A permanent magnet generator and regulator operate to provide a constant output voltage. One known arrangement comprises a constant voltage generator and a series regulator. Although such machines are relatively efficient in terms of both regulator and generator losses, they are difficult to regulate because the generator output is directly related to speed and so varies over a wide range.

Another known arrangement comprises a constant current generator, which is achieved by increasing the inductance in each phase of the generator, and a shunt regulator. Although such machines are easier to regulate over a wide speed range and can be designed to provide power for a full system load from as little as 8% of nominal speed, such machines are subject to relatively large losses in terms of those internal generator losses and of power loss in the regulator. In addition, the added inductance wastes space within the machine which could otherwise have been available for generating useful power. Further, the output is not actually constant over the whole range of generator speeds. For instance, a machine designed to provide 2 amps at minimum speed may actually provide 4 amps at nominal speed so that the output is bigger than required at higher speeds.

UK Patent Application No. GB-A-2 117 143 discloses an apparatus for supplying a regulated DC voltage, while US Patent No. 4 761 726 describes a variable-speed constant frequency power system with a boost convertor auxiliary output and European Patent Application No. EP-A-O 406 182 describes an electric generator-motor system.

According to a first aspect of the invention, there is provided a regulator for a permanent magnet generator, comprising a plurality of input terminals for connection to the generator, a first bridge rectifier whose inputs are connected to the input terminals and whose outputs are connected to output terminals of the regulator, a current detector for detecting the output current of the generator, a switching element for controlling the output current of the generator, a control circuit for controlling the switching element, and a second bridge rectifier whose inputs are connected to the input terminals and whose outputs are connected across the switching element which is switched by the control circuit in response to the generator current detected by the current detector.

The first bridge rectifier may comprise first diodes connected between the input terminals and a first of the output terminals and second diodes connected between the input terminals and a second of the output terminals and the second bridge rectifier may comprise the second diodes and third diodes connected between the input terminals and a first terminal of the switching element, whose second terminal is connected to the second output terminal.

The current controller may comprise a current detector for detecting the output current of the generator and a control circuit for controlling the switching element in response to the current detector. The control circuit may be arranged to close the switching element until the generator output current reaches a predetermined level and then to open the switching element.

The control circuit may be a pulse width modulator. The switching element may be a semiconductor switching element such as a power MOSFET.

A capacitor may be connected between the output terminals.

According to a second aspect of the invention, there is provided a permanent magnet generator including a regulator according to the first aspect of the invention.

It is thus possible to provide a regulator and a generator in which current at low speeds is boosted so as to supply the desired load without having to over-specify the generator. The regulator may be used with a permanent magnet generator of the constant current or constant voltage type. The regulator provides a voltage regulation function at low speed. At higher speeds, the operation depends on whether a constant current or constant voltage generator is used. In the case of a constant voltage generator, the current detection threshold is reduced when the required current is reached. In the case of a constant current generator, the current threshold is increased and modulated to regulate the machine output. At relatively low speeds, the current is boosted without requiring excessive output capability or winding inductance. For high speeds where the generator may produce more current than required, the excess current may be diverted from the load by using the switching element as a current shunt.

By using a second bridge rectifier for connection to the switching element, losses within the regulator can be reduced. For instance, it is possible to eliminate a diode from the main current path. Improved efficiency and reduced cost may therefore be achieved.

The invention will be further described, by way of example, with reference to the accompanying drawings, in which:
Figure 1 is a block schematic diagram of a permanent magnet generator and regulator of known type; and
Figure 2 is a block schematic diagram of a permanent magnet generator and regulator constituting an embodiment of the present invention.

Like reference numerals refer to like parts in the drawings.

A permanent magnet generator 1 has a three phase output connected to input terminals 2 of the regulator. The input terminals 2 are connected to the input of a three phase bridge rectifier comprising diodes 3 to 8. The anodes of the diodes 3 to 5 are connected to respective ones of the input terminals 2 whereas the cathodes of the diodes 6 to 8 are connected to the respective input terminals. The cathodes of the diodes 3 to 5 are connected together and to the anode of a diode 9, whose cathode is connected to a positive output terminal 10 of the regulator. The anodes of the diodes 6 to 8 are connected together and to a negative output terminal 11 of the rectifier.

The source-drain path of a power MOSFET 12 is connected between the cathodes of the diodes 3 to 5 and the negative output terminal 11. The gate of the transistor 12 is connected to the output of a pulse width modulation control circuit 13 which is connected between the output terminals 10 and 11. A capacitor 14 is connected between the output terminals 10 and 11.

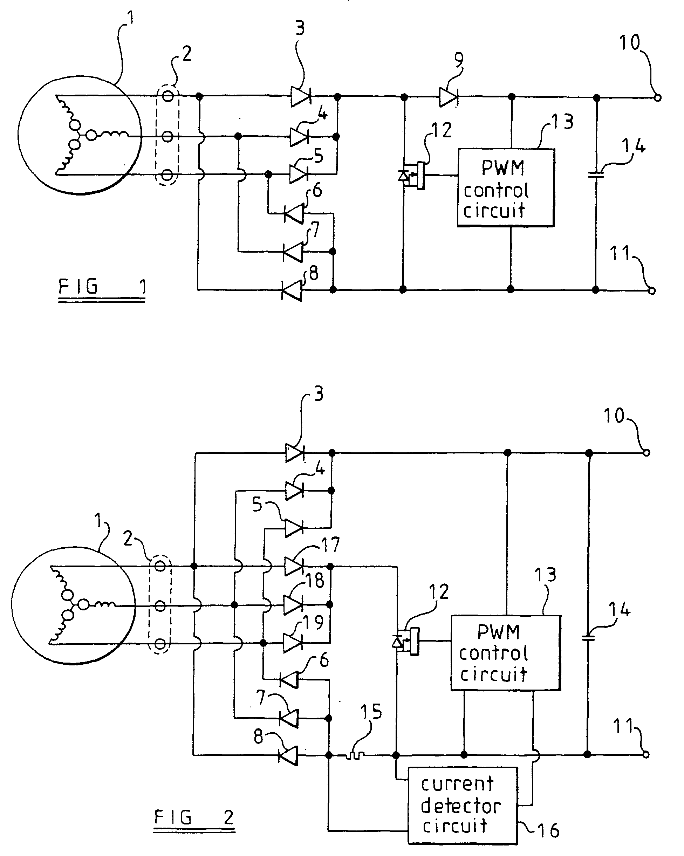

The generator shown in Figure 1 is a constant current machine. The control circuit 13 monitors the voltage across the output terminals 10 and 11 and pulse width modulates conduction of the transistor 12 so as to maintain a substantially constant machine output voltage. The output windings of the generator 1 have sufficiently large inductance for the generator to operate, throughout much of its speed range, as a constant current generator. In particular, the generator 1 is rated to provide sufficient current at its minimum drive speed to supply sufficient power so as to meet the load requirements placed on the machine. At higher speeds, the imperfect constant current characteristic of the generator 1 is such that the generator supplies a greater output current than is required to meet the load. The control circuit 13 pulse width modulates conduction of the transistor 12 to divert the excess current from the output terminals 10 and 11. When the transistor 12 conducts, the diode 9 isolates the output terminals 10 and 11 so that the load is met from the charge stored in the reservoir capacitor 14.

The constant current machine shown in Figure 1 requires the inductance in the windings of the generator 1 to be increased in order to meet the low speed load. This wastes space within the generator 1 which would otherwise be available for generating useful power so that the machine is of reduced efficiency in terms of power output for mechanical power input. Further, because the generator 1 has to provide sufficient output current at low speeds, it produces a higher output than is needed at higher speeds. Also, the presence of the diode 9 reduces efficiency in that the diode has a finite forward voltage drop but is disposed in the main output current path of the machine and therefore dissipates significant power as heat.

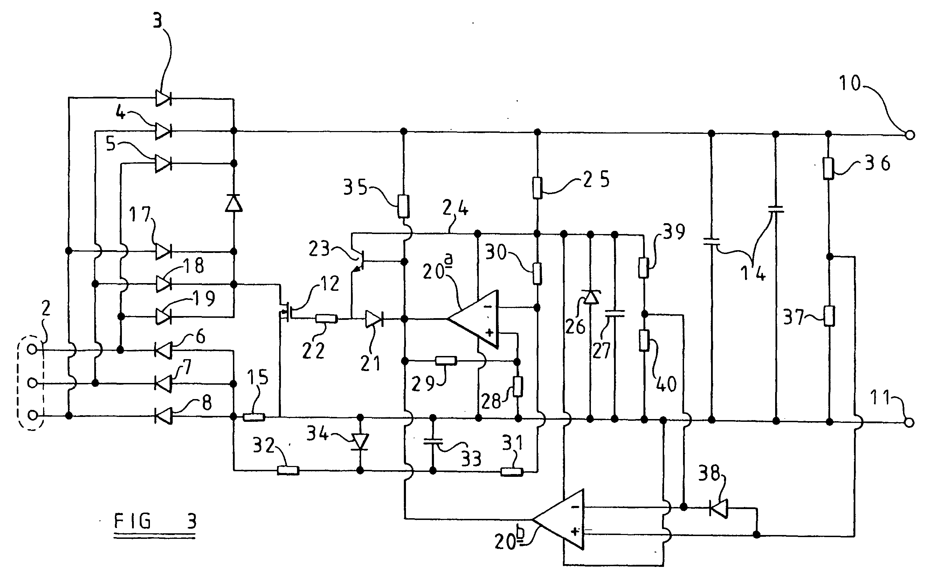

The machine shown in Figure 2 differs from that shown in Figure 1 in that a low value current sensing resistor 15 is connected between the anodes of the diodes 6 to 8 and the negative output terminal 11. A current detector circuit 16 has inputs connected across the resistor 15 and an output connected to the control circuit 13. Further, the diode 9 is omitted and a second three phase bridge rectifier comprising the diodes 6 to 8 and diodes 17 to 19 is provided. The anodes of the diodes 17 to 19 are connected to respective ones of the input terminals 2. The source-drain path of the transistor 12 is connected between the cathodes of the diodes 17 to 19 and the negative supply terminal 11.

The generator 1 of Figure 2 differs from that of Figure 1 in that the windings have optimum impedance, load matching being accommodated by the current detector. In particular, the generator 1 of Figure 2 is rated to supply the desired output power of the machine throughout the speed range instead of, as in the case of Figure 1, being rated to supply the nominal machine output current at the minimum speed.

At relatively low speeds, the generator 1 produces less than the desired output current for maintaining the desired machine output voltage at the output terminals 10 and 11. This is sensed by the current detector circuit 16 which detects a voltage drop across the resistor 15 which is less than a predetermined value corresponding to the nominal machine output. The detector circuit 16 causes the control circuit 13 to switch on the transistor 12, which short circuits the generator output. This causes the generator 1 to increase its output current until the detector circuit 16 detects that the current flowing through the resistor 15 is greater than a threshold value. The detector 16 then causes the control circuit 13 to switch off the transistor 12 so that the higher current, which corresponds to the nominal output current of the machine, flows to the load. When the current falls below the predetermined level, this cycle of operation is repeated.

At a certain speed, the generator 1 produces sufficient current for the load without requiring intervention by the current detector circuit 16 and the control circuit 13. For high speeds, the generator 1 produces a greater current than is required by the load. The control circuit 13 then operates in the same way as that of Figure 1 to pulse width modulate conduction of the transistor 12 so as to divert the excess current away from the output terminals 10 and 11 of the machine; in order to regulate the output voltage, the current threshold will need to be increased.

The regulator of Figure 2 and, in particular, the control circuit 13 and the detector circuit 16 are shown in more detail in Figure 3. These circuits are based around integrated circuit comparators 20a and 20b of the open collector output type. The output of the comparator 20 is connected via a diode 21 and a resistor 22 to the gate of the transistor 12. The output of the comparator 20a is also connected to the base of a transistor 23 whose emitter is connected to the anode of the diode 21 and the resistor 22 and whose collector is connected to a power supply line 24. The base of the transistor 23 is connected via a biasing resistor 35 to the terminal 10. The power supply line 24 is connected via a resistor 25 to the output terminal 10 and is stabilised and smoothed by a zener diode 26 and a capacitor 27. The power supply terminals of the comparators 20a and 20b are connected between the power supply line 24 and the output terminal 11.

The non-inverting input of the comparator 20a is connected via a resistor 28 to the terminal 11 and via a resistor 29 to the output of the comparator 20a. The inverting input of the comparator 20a is connected via a resistor 30 to the supply line 24 and via resistors 31 and 32 to the anodes of the rectifier diodes 6, 7 and 8. The connection between the resistors 31 and 32 is connected to the terminal 11 by a parallel circuit comprising a compactor 33 and a diode 34.

During operation of the machine, the capacitor 14 acts as a reservoir and smoothing capacitor so as to smooth the output of the machine.

The non-inverting input of the comparator 20b is connected to a potential divider comprising resistors 36 and 37 connected between the terminals 10 and 11. The inverting input of the comparator 20b is connected via a diode 38 to the non-inverting input and to a potential divider comprising resistors 39 and 40 connected between the supply line 24 and the terminal 11. The output of the comparator 20b is connected to the cathode of the diode 21.

The comparator 20a and associated components form a comparison circuit with positive feedback and hysteresis. When the output current of the permanent magnet generator is too low, the voltage drop across the resistor 15 is sufficiently low for the output of the comparator 20a to go high, thus turning on the transistor 12 via the transistor 23 which ensures sufficient gate drive for the transistor 12 for adequate speed of switching on the transistor 12. The transistor 12 thus forms a short circuit across the generator which, as described hereinbefore, causes the generator current to increase. When the voltage across the resistor 15 rises to a sufficiently high value as a result of increased generator output current, the output of the comparator 20a goes low and discharges the gate capacitance of the transistor 12 via the resistor 22 and the diode 21. The transistor 12 is thus switched off and the increased current flows to the output terminals 10 and 11. The diode 34 prevents the inverting input of the comparator 20a from going more than 300 millivolts below the voltage of the terminal 11 so as to prevent operation beyond the comparator mode range.

The comparator 20b compares a portion of the output voltage from the potential divider 36, 37 with a reference voltage from the potential divider 39, 40 across the zener diode 26 and prevents the transistor 12 from being switched on by the comparator 20a if the generator output voltage is too low. This is necessary to prevent the transistor 12 from entering a linear state from which it would never escape. When the output voltage is adequate to ensure saturated switching of the transistor 12, the output of the comparator 20b acts as an open collector and has substantially no effect on operation of the circuit.

Although the arrangements shown in Figures 2 and 3 are for use with a constant current permanent magnet generator, such arrangements may be modified for use with a constant voltage generator. In this case, the current detector threshold is reduced when the required current/voltage level is reached so that the 'boost function' is no longer provided. The machine, which is designed to provide the required voltage at full speed, therefore passes directly to output, giving maximum efficiency.

It is thus possible to provide a constant current machine in which the generator 1 is of reduced rating and size. The generator therefore operates more efficiently and its cost is reduced. Further, by minimising the diode forward voltage drops in the main current circuit, the electrical efficiency of the regulator is improved. The efficiency of the machine is therefore improved and the cost is reduced.

## Claims

1. A regulator for a permanent magnet generator (1) comprising a plurality of input terminals (2) for connection to the generator (1), a first bridge rectifier (3-8) whose inputs are connected to the input terminals (2) and whose outputs are connected to the output terminals (10, 11) of the regulator, a current detector (15) for detecting the output current of the generator (1), a switching element (12) for controlling the output current of the generator (1) and a control circuit (13) for controlling the switching element,
**characterised by** a second bridge rectifier (6-8, 17-19), whose inputs are connected to the input terminals (2) and whose outputs are connected across the switching element (12) which is switched by the control circuit (13) in response to the generator output current detected by the current detector (15) and in that the control circuit (13) is arranged to close the switching element (12) until the generator output current reaches a predetermined level and then to open the switching element (12).

2. A regulator as claimed in Claim 1, **characterised in that** the first bridge rectifier comprises first diodes (3-5) connected between the input terminals (2) and a first (10) of the output terminals (10, 11) and second diodes (6-8) connected between the input terminals (2) and a second (11) of the output terminals (10, 11), and **in that** the second bridge rectifier comprises the second diodes (6-8) and third diodes (17-19) connected between the input terminals (2) and a first terminal of the switching element (12), whose second terminal is connected to the second output terminal (11).

3. A regulator as claimed in Claim 1 or 2, **characterised in that** the current controller (13, 16) comprises a current detector (15, 16) for detecting the output current of the generator and a control circuit (13) for controlling the switching element (12) in response to the current detector (15, 16).

4. A regulator as claimed in Claim 3, **characterised in that** the control circuit (13) is a pulse width modulator.

5. A modulator as claimed in any one of Claims 1 to 4, **characterised by** a capacitor (14) connected between the output terminals (10, 11).

6. A modulator as claimed in any one of the preceding claims, **characterised in that** the switching element (12) is a semiconductor switching element.

7. A permanent magnet generator (1) **characterised by** including a regulator as claimed in any one of the preceding claims.

8. A generator (1) as claimed in Claim 7, **characterised by** being of the constant current type.

9. A generator (1) as claimed in Claim 7, **characterised by** being of the constant voltage type.

## Patentansprüche

1. Regler für einen Permanentmagneten-Generator (1) umfassend eine Vielzahl von Eingangsanschlüssen (2) für eine Verbindung mit dem Generator (1), einen Brückengleichrichter (3-8), dessen Eingänge mit den Eingangsanschlüssen (2) verbunden sind und dessen Ausgänge mit den Ausgangsanschlüssen (10, 11) des Reglers verbunden sind, einen Stromdetektor (15) zum Erfassen des Ausgangsstroms des Generators (1), ein Schaltelement (12) zum Steuern des Ausgangsstroms des Generators (1), und eine Steuerschaltung (13) zum Steuern des Schaltelements,
**gekennzeichnet durch** einen zweiten Brückengleichrichter (6-8, 17-19), dessen Eingänge mit den Eingangsanschlüssen (2) verbunden sind und dessen Ausgänge über das Schaltelement (12) geschaltet sind, das **durch** die Steuerschaltung (13) im Ansprechen auf den Generatorausgangsstrom, der von dem Stromdetektor (15) erfasst wird, geschaltet wird, und
dass die Steuerschaltung (13) angeordnet ist, um das Schaltelement (12) zu schließen, bis der Generatorausgangsstrom einen vorgegebenen Pegel erreicht, und um dann das Schaltelement (12) zu öffnen.

2. Regler nach Anspruch 1, **dadurch gekennzeichnet, dass** der erste Brückengleichrichter erste Dioden (3-5), die zwischen die Eingangsanschlüsse (2) und einen ersten (10) der Ausgangsanschlüsse (10, 11) geschaltet sind, und zweite Dioden (6-8), die zwischen die Eingangsanschlüsse (2) und einen zweiten (11) der Ausgangsanschlüsse (10,11) geschaltet sind, umfasst und dass der zweite Brückengleichrichter die zweiten Dioden (6-8) und dritte Dioden (17-19), die zwischen die Eingangsanschlüsse (2) und einen ersten Anschluss des Schaltelements (12), dessen zweiter Anschluss mit dem zweiten Ausgangsanschluss (11) verbunden ist, geschaltet sind, umfasst.

3. Regler nach Anspruch 1 oder 2, **dadurch gekennzeichnet, dass** der Stromcontroller (13, 16) einen Stromdetektor (15, 16) zum Erfassen des Ausgangsstroms des Generators und eine Steuerschaltung (13) zum Steuern des Schaltelements (12) im Ansprechen auf den Stromdetektor (15, 16) umfasst.

4. Regler nach Anspruch 3, **dadurch gekennzeichnet, dass** die Steuerschaltung (13) ein Impulsbreitenmodulator ist.

5. Modulator nach irgendeinem der Ansprüche 1 bis 4, **gekennzeichnet durch** einen Kondensator ( 14), der zwischen die Ausgangsanschlüsse (10, 11) geschaltet ist.

6. Modulator nach irgendeinem der vorangehenden Ansprüche, **dadurch gekennzeichnet, dass** das Schaltelement (12) ein Halbleiterschaltelement ist.

7. Permanentmagneten-Generator (1) **dadurch gekennzeichnet, dass** er einen Regler nach irgendeinem der vorangehenden Ansprüche einschließt.

8. Generator (1) nach Anspruch 7, **dadurch gekennzeichnet, dass** es sich bei ihm um ein Konstantstrom-Typ handelt.

9. Generator (1) nach Anspruch 7, **dadurch gekennzeichnet, dass** es sich bei ihm um einen Konstantspannungs-Typ handelt.

## Revendications

1. Un régulateur pour un alternateur à aimants permanents (1) comprenant une multiplicité de bornes d'entrée (2) pour la connexion à l'alternateur (1), un premier redresseur en pont (3-8) dont les entrées sont connectées aux bornes d'entrée (2) et dont les sorties sont connectées aux bornes de sortie (10, 11) du régulateur, un détecteur de courant (15) pour détecter le courant de sortie de l'alternateur (1), un élément de commutation (12) pour commander le courant de sortie de l'alternateur (1) et un circuit de commande (13) pour commander l'élément de commutation,
**caractérisé par** un second redresseur en pont (6-8, 17-19), dont les entrées sont connectées aux bornes d'entrée (2) et dont les sorties sont connectées aux bornes de l'élément de commutation (12) qui est commuté par le circuit de commande (13) en réponse au courant de sortie de l'alternateur détecté par le détecteur de courant (15), et
par le fait que le circuit de commande (13) est adapté pour fermer l'élément de commutation (12) jusqu'à ce que le courant de sortie de l'alternateur atteigne un niveau prédéterminé, et ensuite pour ouvrir l'élément de commutation (12).

2. Un régulateur selon la revendication 1, **caractérisé en ce que** le premier redresseur en pont comprend des premières diodes (3-5) connectées entre les bornes d'entrée (2) et une première (10) des bornes de sortie (10, 11), et des secondes diodes (6-8) connectées entre les bornes d'entrée (2) et une seconde ( 11 ) des bornes de sortie (10, 11 ), et **en ce que** le second redresseur en pont comprend les secondes diodes (6-8) et des troisièmes diodes (17-19) connectées entre les bornes d'entrée (2) et une première borne de l'élément de commutation (12), dont la seconde borne est connectée à la seconde borne de sortie (11).

3. Un régulateur selon la revendication 1 ou 2, **caractérisé en ce que** l'unité de commande de courant (13, 16) comprend un détecteur de courant (15, 16) pour détecter le courant de sortie de l'alternateur et un circuit de commande (13) pour commander l'élément de commutation (12) en réponse au détecteur de courant (15, 16).

4. Un régulateur selon la revendication 3, **caractérisé en ce que** le circuit de commande (13) est un modulateur d'impulsions en largeur.

5. Un modulateur selon l'une quelconque des revendications 1 à 4, **caractérisé par** un condensateur (14) connecté entre les bornes de sortie (10, 11).

6. Un modulateur selon l'une quelconque des revendications précédentes, **caractérisé en ce que** l'élément de commutation (12) est un élément de commutation à semiconducteur.

7. Un alternateur à aimants permanents (1) **caractérisé en ce qu'**il comprend un régulateur selon l'une quelconque des revendications précédentes.

8. Un alternateur (1) selon la revendication 7, **caractérisé en ce qu'**il est du type à courant constant.

9. Un alternateur (1) selon la revendication 7, **caractérisé en ce qu'**il est du type à tension constante.
